# EUROPÄISCHE PATENTSCHRIFT

(11) **EP 2 039 916 B1**
(45) Veröffentlichungstag und Bekanntmachung des Hinweises auf die Patenterteilung: **11.05.2016**
(21) Anmeldenummer: 08010946.5
(22) Anmeldetag: 17.06.2008
(51) Int. Cl.: F02D 41/00, F02D 41/02, F02D 19/02, F02D 29/06, F02D 19/10, F02D 19/06

(54) **Vorrichtung zur Regelung eines mit flüssigem und gasförmigem Kraftstoff betreibbaren Verbrennungsmotors**
Device for regulating a combustion engine which can be operated with liquid and gaseous fuel
Dispositif de régulation d'un moteur à combustion interne pouvant fonctionner avec du carburant liquide et gazeux

(30) Priorität: 18.09.2007 DE 102007044522
(43) Veröffentlichungstag der Anmeldung: 25.03.2009
(73) Patentinhaber: MAN Diesel SE, 86153 Augsburg (DE)
(72) Erfinder: Böckhoff, Nicolaus, 86551 Aichach (DE); Huslik, Fabian, 86156 Augsburg (DE); Müller, Harald, 86485 Biberach (DE); Pientschik, Christoph, 86836 Klosterlechfeld (DE)

(56) Entgegenhaltungen:
- EP-A- 0 889 222
- EP-A1- 1 602 813
- WO-A1-87/05360
- DE-A1- 3 149 839
- GB-A- 2 385 433
- US-A- 5 937 800

## Beschreibung

Die Erfindung betrifft eine Vorrichtung zur Regelung eines mit flüssigem und/oder gasförmigem Kraftstoff betreibbaren Verbrennungsmotors gemäß dem Oberbegriff des Anspruchs 1. In der Regel sind solche Motoren für große Leistung ausgelegt, laufen mit einer vorgegebenen konstanten Drehzahl und treiben einen Generator zur Erzeugung von elektrischem Strom an. Der Einsatz derartiger Motoren ist insbesondere dort von Interesse, wo gasförmiger Kraftstoff als vorteilhafte Alternative zu flüssigem Kraftstoff ohne weiteres zur Verfügung steht, wie beispielsweise bei stationären Anlagen zur Stromerzeugung in der Nähe von Gasfördergebieten, oder beim Antrieb von Tankschiffen, die Gas befördern.

Die Notwendigkeit, einen für den Betrieb mit Gas ausgelegten Motor auch mit Flüssigkraftstoff, wie insbesondere Dieselkraftstoff, betreiben zu können, ergibt sich daraus, dass ein Start immer nur mit Flüssigkraftstoff möglich ist, und dass in der Regel der Betrieb auch bei einem Ausfall der Gasversorgung gewährleistet sein muss. Hieraus folgt, dass es möglich sein muss, den Motor während des kontinuierlichen Betriebs von einer Kraftstoffart auf die andere umzustellen.

Eine bekannte Art der Kraftstoffumstellung im kontinuierlichen Betrieb sieht vor, die Zufuhr des bisher verwendeten Kraftstoffs ausgehend von dem aktuellen Wert zu Beginn der Umstellung linear mit einer fest vorgegebenen Rate bis auf Null zu drosseln. Der Ausgang des Drehzahlreglers wird zu Beginn der Umstellung von der Kraftstoffversorgungsanlage der bisherigen Kraftstoffart getrennt, auf Null rückgesetzt und auf die Kraftstoffversorgungsanlage der neuen Kraftstoffart aufgeschaltet. Der Drehzahlregler erhöht anschließend aufgrund seiner normalen Funktionsweise die Zufuhr der neuen Kraftstoffsart automatisch im richtigen Ausmaß, um die zunehmende Drosselung der Zufuhr der bisherigen Kraftstoffart auszugleichen, bis ein stationärer Zustand im ausschließlichen Betrieb mit der neuen Kraftstoffart erreicht wird.

Ein Nachteil dieses Konzeptes besteht darin, dass es nur eine allmähliche Umstellung, aber keine Schnellumschaltung von einer Kraftstoffart auf die andere erlaubt, da der Drehzahlregler dafür optimiert ist. die Drehzahl konstant zu halten, und daher nur eine langsame Drosselung der bisherigen Kraftstoffart ausgleichen kann, wenn kein Leistungseinbruch auftreten darf. Die Möglichkeit einer Schnellumschaltung ist aber wünschenswert, insbesondere vom Betrieb mit Gas auf den Betrieb mit Flüssigkraftstoff, da die Gasversorgung beim Auftreten eines Lecks wegen Explosionsgefahr sofort unterbrochen werden muss.

Die US 5,937,800 zeigt des Weiteren eine Vorrichtung zur Regelung eines mit flüssigem und/oder gasförmigem Kraftstoff betreibbaren Verbrennungsmotors, mit einem Drehzahlregler, welcher ein von der Ist-Drehzahl des Motors abhängiges, die Leistungsabgabe des Motors beeinflussendes Regelsignal ausgibt, wobei das Regelsignal des Drehzahlreglers, welches ein Maß für die von dem Motor abzugebende Gesamtleistung darstellt, einer Teilereinrichtung zugeführt wird, welche das Maß für die Gesamtleistung gemäß einem vorbestimmten Verhältnis in einen Beitrag des flüssigen Kraftstoffs und einen Beitrag des gasförmigen Kraftstoffs aufteilt, und die Teilereinrichtung hierzu ein zweites und ein drittes Regelsignal erzeugt und ausgibt, wobei das zweite Regelsignal die pro Zeiteinheit in den Motor eingespritzte Flüssigkraftstoffmenge und das dritte Regelsignal die pro Zeiteinheit in den Motor eingedüste Gas-Kraftstoffmenge beeinflusst, so dass ein Schnellumschalten von einer Kraftstoffart auf die andere möglich wird.

Die Aufgabe der Erfindung besteht nun darin, bei einem gattungsgemäßen Motor unter Beibehaltung einer Schnellumschaltung von einer Kraftstoffart auf die andere einen Mischbetrieb des Motors mit beiden Kraftstoffarten gleichzeitig zu ermöglichen, und einen automatischen Ausgleich von Schwankungen in der Gasqualität zu gewährleisten

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Die Erfindung sieht vor, die Kraftstoffversorgungsanlagen beider Kraftstoffarten ständig parallel zueinander zu regeln und dabei die Beiträge der einzelnen Kraftstoffarten zur Gesamtleistung des Motors in einem vorbestimmten Verhältnis aufzuteilen. Hierbei entspricht ein Betrieb mit nur einer Kraftstoffart einem Verhältniswert von Null bzw. Eins und eine Umschaltung der Kraftstoffart einem Wechsel des Verhältniswertes von Null auf Eins oder umgekehrt Dadurch, dass die Regelung ständig parallel auf beide Kraftstoffversorgungsanlagen wirkt, kann eine Umschaltung beliebig schnell erfolgen und ist in der Geschwindigkeit nur durch die Signallaufzeiten in der Regelektronik und durch die Ansprechzeiten der Aktoren in den Kraftstoffversorgungsanlagen begrenzt.

Der ständige Betrieb der Regelung beider Kraftstoffversorgungsanlagen hat den zusätzlichen Vorteil, dass er über die Schnellumschaltung zwischen den beiden Kraftstoffarten hinaus auch einen Mischbetrieb des Motors mit beiden Kraftstoffarten gleichzeitig ermöglicht. Dabei ist das Verhältnis der Beiträge der beiden Kraftstoffarten zur Gesamtleistung des Motors beliebig einstellbar, Hierzu wird anhand jeweiliger Kennlinien für beide Kraftstoffarten der jeweils vorgesehene Leistungsbeitrag in ein jeweiliges Stellsignal für die Kraftstoffversorgungsanlage jeder einzelnen Kraftstoffart umgesetzt. Eine vorteilhafte Anwendung des Mischbetriebs liegt insbesondere in der Möglichkeit, bei unzureichender Gasmenge durch die zusätzliche Zufuhr von Flüssigkraftstoff eine Motorleistung zu erzielen, die im alleinigen Gasbetrieb nicht erreichbar wäre.

Unter dem Gesichtspunkt, dass die Gasqualität Schwankungen unterworfen sein kann, sieht die Erfindung vor, die tatsächliche Leistung zu messen und die Differenz zwischen der durch den Drehzahlregler insgesamt errechneten und der tatsächlichen Leistung zur Korrektur des Sollwertes des Gasdrucks zu verwenden, d.h. den Sollwert über einen Regler zu erhöhen, wenn die tatsächliche Leistung hinter der errechneten zurückbleibt, um dem zugrunde liegenden Rückgang der Gasqualität entgegenzuwirken. Die Realisierung dieses Konzeptes vereinfacht sich, wenn der Motor einen Generator zur Stromerzeugung antreibt, da in diesem Fall die tatsächliche Motorleistung problemlos elektrisch gemessen werden kann.

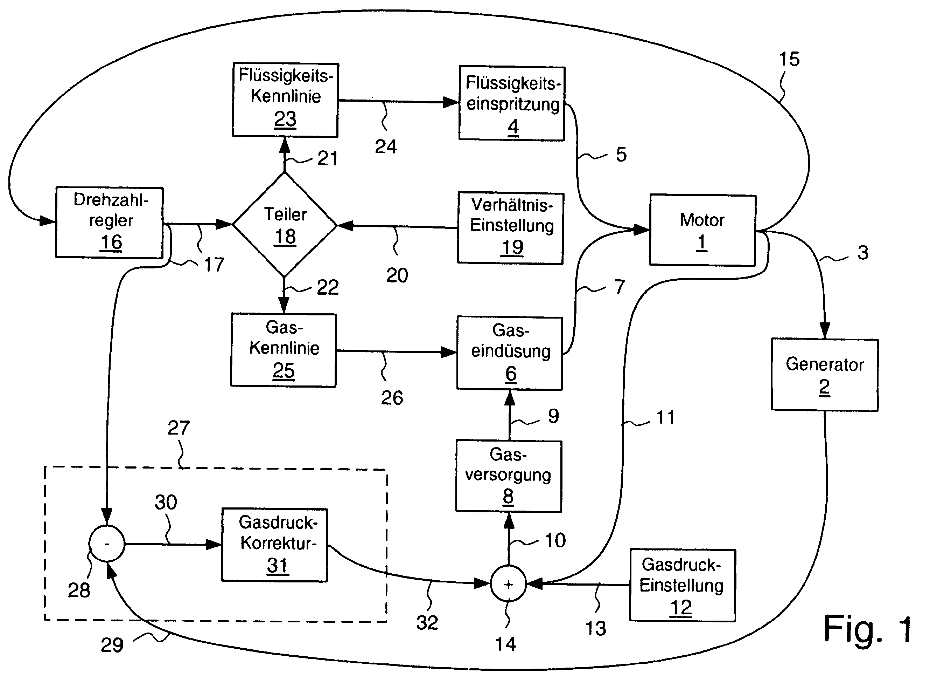

Nachfolgend wird ein Ausführungsbeispiel der Erfindung anhand der Zeichnung beschrieben. Die einzige Figur 1 zeigt einen Signalflussplan einer erfindungsgemäßen Vorrichtung.

Ein Motor 1, der einen elektrischen Generator 2 mit einer Leistung 3 antreibt, kann von einer Kraftstoffeinspritzanlage 4 mit einem Flüssigkraftstoffdurchsatz 5 und/oder von einer Gaseindüsungsanlage 6 mit einem Gasdurchsatz 7 beaufschlagt werden. Hierbei wird das Gas der Gaseindüsungsanlage 6 von einer Gasversorgung 8 mit einem Gasdruck 9 zugeführt.

Der Gasversorgung 8 wird ein Gasdruck-Sollwert 10 vorgegeben, der sich durch Addition des von dem Motor 1 durch einen Turbolader erzeugten Ladeluftdrucks 11 zu einem konstanten, von einer Gasdruck-Einstelleinrichtung 12 ausgegebenen Gasdruck-Einstellwert 13 ergibt. Dem Addierer 14, der besagte Addition ausführt, kann optional noch ein drittes Eingangssignal 32 zugeführt werden, welches vorerst nicht von Interesse ist, aber später noch erläutert werden wird. Die Einstelleinrichtung 12 erlaubt eine manuelle und/oder automatische Einstellung des Gasdruck-Einstellwertes 13.

Die Ist-Drehzahl 15 des Motors 1 wird einem Drehzahlregler 16 zugeführt, an dem intern eine vorbestimmte, konstante Solldrehzahl eingestellt ist. Ein von dem Drehzahlregler 16 abgegebenes erstes Regelsignal 17, welches der Motorleistung 3 als Absolutwert oder normiert auf die Nennleistung des Motors 1 entspricht, wird einem Teiler 18 zugeführt. Diesem ist durch eine Einstelleinrichtung 19 ein Verhältnis 20 der jeweiligen Beiträge der beiden Kraftstoffarten zur Gesamtleistung des Motors 1 vorgegeben.

Auch die Einstellung des Leistungsverhältnisses in der Einstelleinrichtung 19 kann sowohl manuell durch Bedienpersonal, als auch automatisch erfolgen. So kann beispielsweise ein manuell vorgegebenes, zwischen Null und Eins liegendes Verhältnis 20 im Rahmen einer Schnellumschaltung automatisch auf Null oder Eins gesetzt werden, wenn die Quelle eines der beiden Kraftstoffe ausfällt.

Der Teiler 18 gibt ein zweites Regelsignal 21, welches die durch den Flüssigkraftstoff beizutragende Leistung angibt, und ein drittes Regelsignal 22, welches die durch den gasförmigen Kraftstoff beizutragende Leistung angibt, aus. Ebenso wie das erste Regelsignal 17 entsprechen auch das zweite und das dritte Regelsignal 21 und 22 jeweils einem Absolutwert der Leistung des Motors 1 oder sie sind auf die Nennleistung des Motors 1 normiert.

Das zweite Regelsignal 21 wird einer ersten Umsetzungseinrichtung 23 zugeführt, welche in einem Speicher eine Kennlinie enthält, die den Zusammenhang zwischen einem auf die Kraftstoffeinspritzanlage 4 wirkenden Stellsignal 24 und der Gesamtleistung 3 des Motors 1 beschreibt. Anhand der gespeicherten Kennlinie setzt die erste Umsetzungseinrichtung 23 das zweite Regelsignal 21 in ein entsprechendes Stellsignal 24 um, welches von ihr an die Kraftstoffeinspritzanlage 4 ausgegeben wird.

Das dritte Regelsignal 22 wird einer zweiten Umsetzungseinrichtung 25 zugeführt, welche in einem Speicher eine Kennlinie enthält, die den Zusammenhang zwischen einem auf die Gaseindüsungsanlage 6 wirkenden Stellsignal 26 und der Gesamtleistung 3 des Motors 1 beschreibt. Anhand der gespeicherten Kennlinie setzt die zweite Umsetzungseinrichtung 25 das dritte Regelsignal 22 in ein entsprechendes Stellsignal 26 um, welches von ihr an die Gaseindüsungsanlage 6 ausgegeben wird.

Auf diese Weise kann der Motor 1 gleichzeitig mit beiden verschiedenen Kraftstoffarten betrieben werden, wobei das Verhältnis ihrer Beiträge zur Gesamtleistung 3 von der Einstelleinrichtung 19 aus auf einen beliebigen Wert zwischen Null und Eins einschließlich der beiden Grenzen eingestellt werden kann. Es leuchtet ein, dass die Geschwindigkeit, mit der sich eine Änderung des Verhältnisses 20 durch die Einstelleinrichtung 19 auf den Motor 1 auswirkt, nur von den Signallaufzeiten in der Regelelektronik und von den Ansprechzeiten der anzusteuernden Aktoren abhängt, also sehr hoch ist. Auch eine Umschaltung von reinem Gasbetrieb auf Betrieb mit reinem Flüssigkraftstoff erfolgt daher sehr schnell.

Während bei Flüssigkraftstoff nur mit unwesentlichen Qualitätsschwankungen zu rechnen ist, kann gasförmiger Kraftstoff merkliche Qualitätsschwankungen, d.h. zeitliche Variationen des Energiegehalts pro Mengeneinheit, aufweisen. Die in der zweiten Umsetzungseinrichtung 25 gespeicherte Kennlinie, anhand derer der vorgegebene Leistungsbeitrag 22 des gasförmigen Kraftstoffs in ein Stellsignal 26 für die Eindüsungsanlage 6 umgesetzt wird, geht aber notwendigerweise von einer vorbestimmten Standardqualität des gasförmigen Kraftstoffs aus. Eine Abweichung der Gasqualität von dem angenommenen Standard hätte somit zur Folge, dass der Regelkreis auf der Gasseite falsch parametriert wäre, was insbesondere im reinen Gasbetrieb beim Absinken der Gasqualität unter den Standard zu einem Absinken der Motorleistung 3 führen könnte.

Um Schwankungen der Gasqualität auszugleichen, ist erfindungsgemäß der in Fig. 1 gestrichelt umrandete Funktionsblock 27, der zusammenfassend als Gasqualitätsregelung bezeichnet werden kann, vorgesehen. Diese Gasqualitätsregelung 27 umfasst einen Subtrahierer 28, dem das Ausgangssignal 17 des Drehzahlreglers 16 sowie ein Leistungsmesssignal 29 zugeführt wird. Dabei wird das Leistungsmesssignal 29, welches die tatsächliche momentane Leistungsabgabe des Motors 1 angibt, von einem Messumformer geliefert, der in den von dem Motor 1 angetriebenen Generator 2 integriert ist.

Das Leistungsmessignal 29 wird von dem Ausgangssignal 17 des Drehzahlreglers 16, welches den Sollwert der Gesamtleistung 3 des Motors 1 angibt, subtrahiert und die Differenz 30 einem Regler 31 zugeführt, der seiner Funktion nach als Gasdruck-Korrekturregler bezeichnet werden kann. Das Ausgangssignal 32 dieses Gasdruck-Korrekturreglers 31 wird nämlich zu dem von der Einstelleinrichtung 12 gelieferten Gasdruck-Einstellwert 13 hinzuaddiert und führt zu einer Erhöhung des an der Gasversorgung 8 anliegenden Gasdruck-Sollwertes 10 und folglich auch des Gasdrucks 9, mit dem die Eindüsungsanlage 6 beaufschlagt wird, sofern der Messwert 29 der tatsächlichen Leistung 3 hinter dem von dem Drehzahlregler 16 abgegebenen Sollwert 17 der Gesamtleistung 3 des Motors 1 zurückbleibt.

Hierdurch kann einem Abfall des Beitrags des gasförmigen Kraftstoffs zur Leistung 3 des Motors 1 entgegengewirkt und eine Verschlechterung der Gasqualität ausgeglichen werden, allerdings nicht beliebig, sondern nur bis zu einem gewissen Ausmaß, da der Gasdruck 9 eine vorbestimmte obere Grenze nicht überschreiten darf. Der Wertebereich des Ausgangssignals 32 des Gasdruck-Korrekturreglers 31 ist daher entsprechend begrenzt. Falls der Motor 1 mit Gas als Kraftstoff betrieben wird und die Gasqualität so weit abfällt, dass die geforderte Leistung durch die Erhöhung des Gasdrucks 3 allein nicht mehr kompensiert werden kann, kann zum Mischbetrieb übergegangen und ein Teil der Leistung mit Flüssigkraftstoff erzeugt werden. Dies ist ein weiterer wesentlicher Vorteil der Erfindung.

Bei einem Wiederanstieg der Gasqualität nimmt die tatsächlich abgegebene Leistung 3 des Motors 1 und damit auch das entsprechende Messsignal 29 zu, was zu einem negativen Differenzsignal 30 am Eingang des Gasdruck-Korrekturreglers 31 und zu einem Rückgang des Ausgangssignals 32 dieses Reglers 31 führt. Hierdurch ergibt sich eine Verringerung des Gasdruck-Sollwertes 10. Wenn das Gas wieder Standardqualität erreicht hat, ist Ausgangssignal des Gasdruck-Korrekturreglers 31 Null und der Gasdruck-Sollwert 10 entspricht wieder dem von der Einstelleinrichtung 12 gelieferten Gasdruck-Einstellwert 13. Es versteht sich, dass im Grundsatz auch eine zu hohe Gasqualität durch die Gasqualitätsregelung 27 durch eine Verminderung des Gasdruck-Sollwertes 10 ausgeglichen werden kann, jedoch tritt in der Praxis eher das Problem einer Abweichung der Gasqualität vom Standardwert nach unten auf.

## Patentansprüche

1. Vorrichtung zur Regelung eines mit flüssigem und gasförmigem Kraftstoff betreibbaren Verbrennungsmotors (1), mit einem Drehzahlregler (16), welcher ein von der Istdrehzahl des Motors abhängiges, die Leistungsabgabe des Motors beeinflussendes Ausgangssignal (17) ausgibt, wobei das Ausgangssignal (17) des Drehzahlreglers (16), welches ein Maß für die von dem Motor abzugebende Gesamtleistung (3) darstellt, einer Teilereinrichtung (18) zugeführt wird, welche das Maß für die Gesamtleistung (3) gemäß einem vorbestimmten Verhältnis in einen Beitrag des flüssigen Kraftstoffs und einen Beitrag des gasförmigen Kraftstoffs aufteilt, und die Teilereinrichtung (18) hierzu ein zweites und ein drittes Regelsignal (21; 22) erzeugt und ausgibt, wobei das zweite Regelsignal (21) die pro Zeiteinheit in den Motor (1) eingespritzte Flüssigkraftstoffmenge und das dritte Regelsignal (22) die pro Zeiteinheit in den Motor (1) eingedüste Gaskraftstoffmenge beeinflusst und das zweite und das dritte Regelsignal (21; 22) jeweils einer Umsetzungseinrichtung (23; 25) zugeführt wird, welche aufgrund einer in ihr gespeicherten Kennlinie einen durch das jeweilige zweite oder dritte Regelsignal (21; 22) angegebenen Wert des Beitrags der jeweiligen Kraftstoffart zur Motorleistung in den Wert eines jeweiligen Stellsignals (24; 26) umsetzt, welches die dem Motor (1) pro Zeiteinheit zugeführte Menge der jeweiligen Kraftstoffart bestimmt, **dadurch gekennzeichnet, dass** ein Messumformer vorgesehen ist, der ein Leistungsmesssignal (29) ausgibt, welches ein Maß für die tatsächliche Leistung (3) des Motors darstellt, dass das Leistungsmesssignal (29) von dem Ausgangssignal (17) des Drehzahlreglers (16) subtrahiert und die Differenz einem Gasdruck-Korrekturregler (31) zugeführt wird, und dass das Ausgangssignal (32) dieses Gasdruck-Korrekturreglers (31) zu einem durch eine erste Einstelleinrichtung (12) vorgegebenen Gasdruck-Einstellwert (13) des Gasdrucks hinzuaddiert wird, was zu einer Erhöhung des an einer Gasversorgung (8) anliegenden Gasdruck-Sollwertes (10) und folglich auch des Gasdrucks (9) führt, mit dem eine Eindüsungsanlage (6) beaufschlagt wird.

2. Vorrichtung nach Anspruch 1, **dadurch gekennzeichnet, dass** die Teilereinrichtung (18) mit einer weiteren Einstelleinrichtung (19) verbunden ist, mittels derer das vorbestimmte Verhältnis manuell und/oder automatisch auf einen beliebigen Wert zwischen Null und Eins einschließlich der beiden Grenzen einstellbar ist.

3. Vorrichtung nach Anspruch 1, **dadurch gekennzeichnet, dass** der Motor (1) einen Generator (2) antreibt, der die von dem Motor (1) abgegebene Leistung in elektrische Leistung umsetzt, und dass der das Leistungsmesssignal (29) ausgebende Messumformer in den Generator (2) integriert ist.

## Claims

1. A device for controlling an internal combustion engine (1) that can be operated with liquid and gaseous fuel, with a rotational controller (16) which outputs an output signal (17) that is dependent on the actual rotational speed of the engine and which influences the power output of the engine, wherein the output signal (17) of the rotational controller (16), which represents a measure for the overall power (3) to be output by the engine, is fed to a divider device (18), which divides the measure for the overall output (3) into a contribution for the liquid fuel and a contribution for the gaseous fuel according to a predetermined ratio and the divider device (18) for this generates and outputs a second and third control signal (21;22), wherein the second control signal (21) influences the liquid fuel quantity injected into the engine (1) per unit time and the third control signal (22) the gas fuel quantity injected into the engine (1) per unit time and the second and the third control signal (21;22) in each case is fed to a conversion device (23;25), which based on a characteristic stored in it converts a value of the contribution of the respective type of fuel to the engine power indicated by the respective second or third control signal (21;22) into the value of a respective corrective signal (24;26), which determines the quantity of the respective type of fuel fed to the engine (1) per unit time, **characterized in that** a measurement transducer is provided which outputs a power measurement signal (29), which represents a measure for the actual power (3) of the engine, **in that** the power measurement signal (29) is subtracted from the output signal (17) of the rotational controller (16) and the difference fed to a gas pressure correction controller (31), and **in that** the output signal (32) of this gas pressure correction controller (31) is added to a gas pressure adjusting value (13) of the gas pressure predetermined by a first adjusting device (12), which leads to an increase of the gas pressure set point value (10) that is present at a gas supply (8) and consequently also of the gas pressure (9), which is admitted to an injection system (6).

2. The device according to Claim 1, **characterized in that** the divider device (18) is connected to a further adjusting device (19) by means of which the predetermined ratio can be manually and/or automatically adjusted to any value between zero and one including the two limits.

3. The device according to Claim 1, **characterized in that** the engine (1) drives a generator (2) which converts the power output by the engine (1) into electric power, and **in that** the measurement transducer outputting the power measurement signal (29) is integrated in the generator (2).

## Revendications

1. Dispositif de régulation d'un moteur à combustion interne (1) fonctionnant avec un carburant liquide et gazeux, comportant un régulateur de vitesse de rotation (16), qui émet un signal de sortie (17) dépendant de la vitesse de rotation effective du moteur, influençant la puissance de sortie du moteur, dans lequel le signal de sortie (17) du régulateur de vitesse de rotation (16), qui représente une quantité de la puissance totale (3) sortant du moteur, est alimenté dans un dispositif séparateur (18), qui divise la quantité de la puissance totale (3) selon un rapport prédéterminé en une contribution du carburant liquide et une contribution du carburant gazeux, et le dispositif séparateur (18) génère et émet à cette fin un deuxième et un troisième signal de régulation (21 ;22), dans lequel le deuxième signal de régulation (21) influence la quantité de carburant liquide injectée par unité de temps dans le moteur (1) et le troisième signal de régulation (22) influence la quantité de carburant gazeux injectée de manière modulée dans le moteur (1) par unité de temps et le deuxième et le troisième signal de régulation (21 ;22) sont alimentés respectivement dans un dispositif de conversion (23 ;25), qui convertit sur la base d'une courbe caractéristique mémorisée dans ce dernier une valeur indiquée par le deuxième ou troisième signal de régulation (21 ;22) de la contribution du type de carburant respectif pour la puissance de moteur en la valeur d'un signal de réglage respectif (24 ;26), qui détermine la quantité du type de carburant respectif alimentée dans le moteur (1) par unité de temps, **caractérisé en ce que** un convertisseur de mesure est prévu, qui émet un signal de mesure de puissance (29), qui représente une quantité de la puissance (3) effective du moteur, **en ce que** le signal de mesure de puissance (29) est soustrait du signal de sortie (17) du régulateur de vitesse de rotation (16) et la différence est alimentée dans une régulateur de correction de pression de gaz (31) et **en ce que** le signal de sortie (32) de ce régulateur de correction de pression de gaz (31) est additionné à une valeur de réglage de pression de gaz (13) prescrite par un premier dispositif de réglage (12), ce qui entraîne une augmentation de la valeur de consigne de pression de gaz (10) présente sur une alimentation en gaz (8) et a des conséquences aussi sur la pression de gaz (9), avec laquelle une installation d'injection modulée (6) est sollicitée.

2. Dispositif selon la revendication 1, **caractérisé en ce que** le dispositif séparateur (18) est relié avec un dispositif de réglage supplémentaire (19), au moyen duquel le rapport prescrit peut être réglé manuellement et/ou automatiquement sur une valeur au choix entre zéro et un incluant les deux limites.

3. Dispositif selon la revendication 1, **caractérisé en ce que** le moteur (1) entraîne un générateur (2), qui convertit la puissance émise par le moteur (1) en une puissance électrique et **en ce que** le convertisseur de mesure émettant le signal de mesure de puissance (29) est intégré dans le générateur (2).
